# DEMANDE DE BREVET EUROPEEN

(11) **EP 2 413 569 A1**
(43) Date de publication de la demande: **01.02.2012**
(21) Numéro de dépôt: 11305990.1
(22) Date de dépôt: 28.07.2011
(51) Int. Cl.: H04L 29/08, H04M 1/725

(54) **Procédé de connexion entre une carte MMSIM et une application**

(30) Priorité: 29.07.2010 FR 1056254
(71) Demandeur: Myriad Group AG, 8001 Zürich (CH)
(72) Inventeur: Pittarello, Gilles Ryan, 73100 AIX LES BAINS (FR)
(74) Mandataire: Blot, Philippe Robert Emile

(57) **Abrégé**

L'invention concerne un procédé d'établissement, sur une plateforme utilisant le système d'exploitation LINUX, d'une connexion entre un serveur d'une carte MMSIM et une application (18) de l'espace utilisateur (16), la liaison à la carte MMSIM étant assurée par une interface USB-IC de l'espace noyau (14), par création d'une interface (30) de type Ethernet entre un module (32) de communication CDC/EEM de l'espace noyau (14) et l'application (18) assurant la communication à partir de commandes TCP/IP de la classe CDC-EEM.
Le procédé comporte la mise en oeuvre d'un deamon (40) dans l'espace utilisateur (16), assurant en tant que tâche de fond, la détection d'évènements issus de l'espace noyau (14), et commandant les étapes suivantes :
- le chargement d'une pile USB hôte dans l'espace noyau (14) pour une communication ultérieure avec la carte MMSIM, et
- la création et la configuration de l'interface réseau (30) lorsque le deamon (40) détecte la liaison physique d'un carte MMSIM.

## Description

La présente invention concerne un procédé d'établissement, sur une plateforme utilisant le système d'exploitation LINUX, d'une connexion entre un serveur d'une carte MMSIM et une application de l'espace utilisateur, la liaison à la carte MMSIM étant assurée par une interface USB-IC de l'espace noyau, par création d'une interface de type Ethernet entre un module de communication CDC/EEM de l'espace noyau et l'application assurant la communication à partir de commandes TCP/IP de la classe CDC-EEM.

Les téléphones mobiles comportent une carte contenant un micro contrôleur et de la mémoire et contenant différentes données de connexion pour l'utilisateur. Cette carte, couramment désignée par UICC pour « Universal Integrated Circuit Card », est communément désignée par « carte SIM ».

De nos jours, apparaissent des cartes SIM dites multimédia couramment désignées par l'expression MMSIM. Ces cartes intègrent un serveur web et une mémoire de stockage de masse, la connexion au téléphone étant assurée par une liaison USB IC.

Même si ces cartes sont spécifiées, il convient d'assurer l'établissement d'une connexion entre le téléphone et la carte proprement dite dans le cas où le téléphone utilise comme système d'exploitation une plateforme Android spécifiée par la société Google.

L'invention a pour but de proposer un mécanisme et un moyen pour l'établissement d'une connexion entre une carte MMSIM et une application Android.

A cet effet, l'invention a pour objet un procédé du type précité, caractérisé en ce qu'il comporte la mise en oeuvre d'un deamon dans l'espace utilisateur, assurant en tant que tâche de fond, la détection d'évènements issus de l'espace noyau, et commandant les étapes suivantes :
- le chargement d'une pile USB hôte dans l'espace noyau pour une communication ultérieure avec la carte MMSIM, et
- la création et la configuration de l'interface réseau lorsque le deamon détecte la liaison physique d'un carte MMSIM.

Suivant les modes particuliers de mise en oeuvre, le procédé comporte l'une ou plusieurs des caractéristiques suivantes :
- le procédé comporte la commande d'un pilote d'accessoire de l'espace noyau par le deamon, grâce à une commande inscrite dans un NODE pour assurer une alimentation de la carte MMSIM ;
- le procédé comporte la production par le deamon, d'une commande inscrite dans un NODE à destination d'un pilote d'accessoire de l'espace noyau sollicitant la production par le pilote d'accessoire d'un évènement de type UEVENT spécifique représentatif de la liaison physique d'une carte MMSIM ;

- le procédé comporte les étapes consistant en :
- la production, lors de la détection de la présence d'une carte MMSIM reliée physiquement, d'un évènement UEVENT spécifique représentatif de la liaison physique par un pilote d'accessoire de l'espace noyau,
- la mise en oeuvre de la création et la configuration de l'interface réseau, sous la commande du daemon seulement lorsque le daemon détecte cet évènement UEVENT spécifique représentatif de cette liaison physique.
- le procédé comporte une étape d'établissement du noyau en mode routeur sous la commande du daemon par mise en oeuvre de règles de traduction d'adresses réseau lors de la réception d'un évènement UEVENT reportant qu'une nouvelle interface réseau a été créée depuis le serveur de la carte MMSIM.

L'invention a également pour objet un téléphone sans fils comportant des moyens pour la mise en oeuvre d'un procédé tel que décrit ci-dessus.

L'invention sera mieux comprise à la lecture de la description qui va suivre, donnée uniquement à titre d'exemple et faite en se référant aux dessins sur lesquels :
- la figure 1 est un schéma illustrant l'agencement des moyens logiciels et matériels dans un téléphone, selon l'invention ;
- la figure 2 est un organigramme de l'établissement d'une connexion entre une application et une MMSIM.

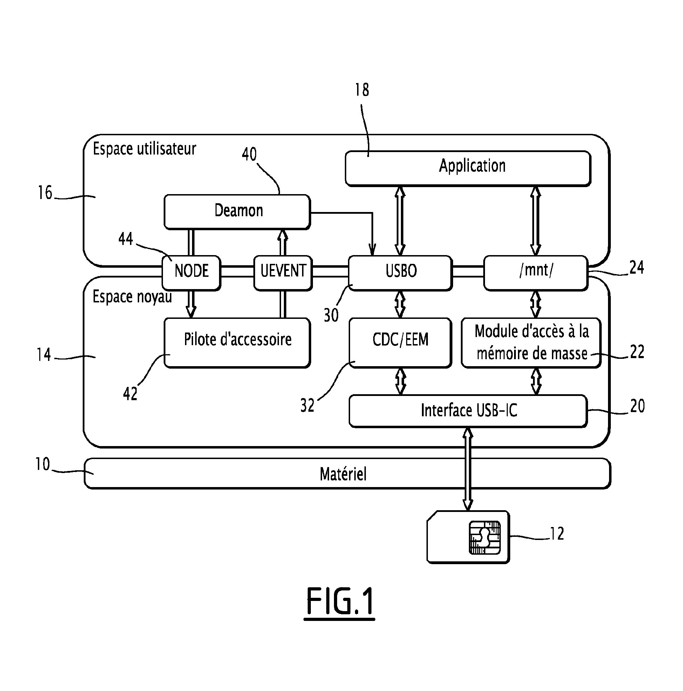

Comme illustré sur la figure 1, le téléphone selon l'invention met en oeuvre une structure physique 10, composée comme connue en soi d'un processeur, d'une mémoire adaptée pour la sauvegarde des données et des programmes mis en oeuvre par le processeur, des moyens de communication avec un réseau, ainsi que des moyens de mise à disposition sonores et visuels d'informations reçues par le téléphone ou disponibles dans celui-ci.

Il comporte, en outre, une carte SIM multimédia 12, couramment désignée par « MMSIM ». Le téléphone mobile est géré par une plateforme Android sous LINUX dont l'espace noyau 14 et l'espace utilisateur 16 sont illustrés sur la figure 1. Des applications 18 propres à être mises en oeuvre par le téléphone, et destinées à communiquer avec la carte MMSIM 12, sont présentes dans l'espace utilisateur 16 de la plateforme Android.

La carte MMSIM se distingue des cartes SIM par la présence d'un serveur web mettant en oeuvre le protocole « OMA http et https protocol », d'une mémoire de stockage de masse et d'une interface « USB IC High Speed Protocol ». Cette carte MMSIM est gérée par des normes définies par l'ETSI.

La carte MMSIM comporte un serveur multimédia connu sous le nom de « Smart Card Web Server » (SCWS) et d'une zone de mémoire NAND. Cette zone est divisée en deux régions distinctes.

La première zone désignée par « Secured Controlled Area » (SCA), met en oeuvre le serveur web (SCWS) et est contrôlée par l'opérateur pour stocker des données propres à l'opérateur, telles que des pages web, des informations d'individualisation du téléphone ou des données d'application multimédia.

La seconde zone, désignée par « Host Controlled Area » (HCA), est contrôlée par l'utilisateur et est utilisée en tant que zone de stockage de masse pour recevoir les données de l'utilisateur tels que des films, des photographies, de la musique, le répertoire téléphonique etc...

Le serveur multimédia SCWS répond, pour sa communication, à la norme ETSI TS 102 483 et son accès est rendu possible par la norme OMA5.

La liaison entre la structure matérielle du téléphone 10 et la carte MMSIM 12 s'effectue par une liaison USB-IC pour « Universal Serial Bus Inter Chip ». Le standard USB-IC est une évolution du standard USB2.0.

Le standard USB-IC permet l'usage de commandes APDU pour les éléments de classe ICCD pour accéder aux données sauvegardées correspondant au standard 2G et 3G de l'ETSI.

Il permet, en outre, l'usage du protocole TCIP/IP en ayant recours à la classe « CDC/EEM » (pour Ethernet Emulation Model). Il permet encore l'accès direct au stockage de masse pour les fichiers.

Comme illustrée sur la figure 1, une application 18 est destinée à communiquer avec la seconde zone HCA par l'intermédiaire d'une interface USB-IC notée 20 et d'un module 22 d'accès à la mémoire de masse contenus dans le noyau 14. La liaison entre l'application 18 et le module 22, à l'interface entre le noyau et l'espace utilisateur, s'effectue par un point de montage 24, définissant le chemin /mnt/.

Pour la liaison entre la première zone SCA de la carte 12 et une application 18, une interface 30 USBO est créée entre l'application 18 et un module 32 de communication CDC/EEM du noyau assurant la communication avec le serveur SCWS de la carte à partir de commandes TCP/IP de la classe CDC-EEM pour « Communications Device Class - Ethernet Emulation Model ».

Pour l'établissement de cette communication, au travers de l'interface réseau USBO de type Ethernet, un daemon 40 est mis en oeuvre sur la plateforme Android afin de charger, dans l'espace noyau les drivers ou pilotes d'accessoires Linux adaptés afin que l'application 18 puisse adresser des requêtes *http ou https* au serveur SCWS de la carte 12.

Le daemon 40 est par exemple écrit en langage C et est mis en oeuvre dans l'espace utilisateur 16 de la plateforme logiciel Android sous Linux. Le daemon 40 prend en charge la sollicitation d'un pilote d'accessoire 42 pour connecter la carte MMSIM 12 en utilisant l'interface USB-IC. Il est également en charge de la création de l'interface 30 réseau Ethernet appropriée appelée USBO permettant aux applications 18 de communiquer avec le serveur de la carte 12.

De manière générale, le daemon 40 communique avec le pilote d'accessoire 42. Ce dernier est installé spécifiquement dans l'espace noyau 14.

Pour la communication entre le daemon 40 et le module 42, le daemon est propre à utiliser une commande propre sur un NODE de Linux dénommé *proc*/*acc*/*route_vlsim* pour solliciter le module 42 et à utiliser un mécanisme UEVENT pour permettre au module 42 de fournir des informations au daemon 40. La commande écrite dans le NODE est spécifique pour la création de l'interface USB-IC.

Le daemon 40 est, en outre, propre à détecter lorsqu'une interface réseau est créée pour un contexte PDP permettant d'accéder à internet. Dans ce cas, il transforme le téléphone en routeur de manière à ce que le serveur SCWS de la carte MMSIM 12 puisse ultérieurement exister dans le réseau local et accéder à un internet au travers du téléphone.

Le daemon 40 est activé lors de chaque mise en route du téléphone et assure une veille permanente.

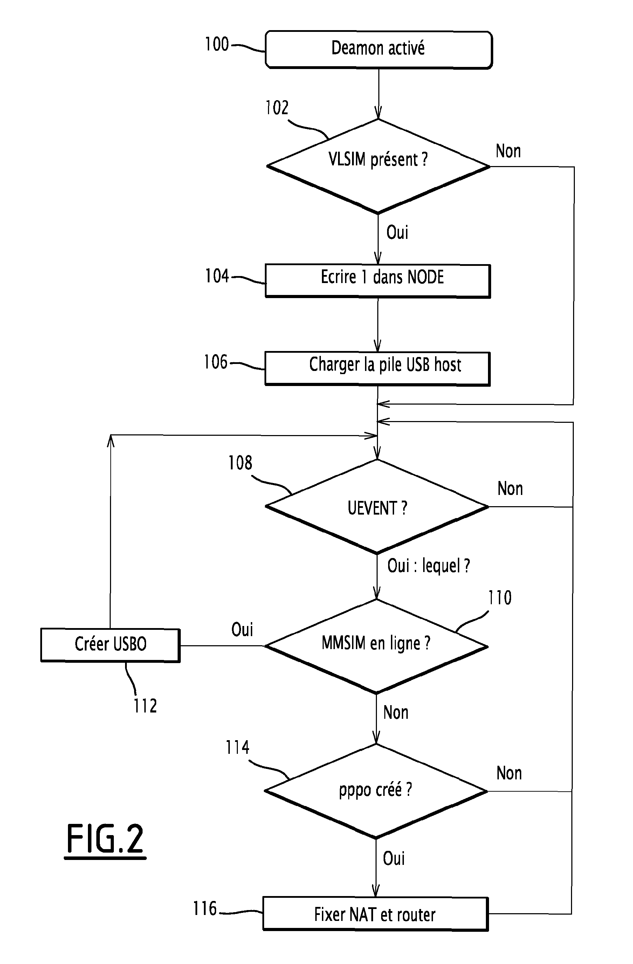

Le mode de connexion avec la carte MMSIM 12 est décrit maintenant en regard de la figure 2.

Après démarrage, à l'étape 100 du daemon, celui-ci cherche la présence d'un fichier vide dénommé *vlsim* dans le répertoire *data*/*vlsim.* Ce fichier et ce répertoire sont présents par défaut dans le système de fichiers du téléphone. La présence de ce fichier indique que le téléphone est susceptible de gérer un carte MMSIM.

A l'étape 102, le deamon 40 détermine si le fichier *vlsim* est présent. Si tel est le cas, le daemon écrit une commande dans le NODE illustré par la référence 44 sur la figure 1. Cette commande est écrite dans le NODE *proc*/*acc*/*route_vlsim.*
A l'étape 104, la valeur *0x01* est inscrite dans ce node. De cette manière, le pilote d'accessoire 42 configure l'unité de gestion de puissance pour l'alimentation de la carte MMSIM et le multiplexeur pour connecter la carte MMSIM à l'interface USB.

A l'étape 106, le daemon 40 charge la pile USB hôte dans l'espace noyau 14 pour une communication ultérieure avec la carte MMSIM. A cet effet, il exécute la commande suivante : *insmod*/*system*/*lib*/*modules*/*ohci-hcd.ko.*

Si à l'étape 102, le fichier est absent, les étapes 104 et 106 sont omises.

A l'étape 108, le retour par l'intermédiaire du mécanisme UEVENT est attendu du pilote d'accessoire 42.

Lorsque la plateforme physique 10 est connectée à la carte SIM 12, le pilote d'accessoire 42 engendre l'UEVENT dénommé *vlsim* en y indiquant l'état « online ». En tant que tâche de fond, le daemon 40 attend un tel UEVENT dans sa boucle principale et reste bloqué tant qu'il n'en reçoit pas.

Lorsque le daemon détecte le UEVENT *vlsim à* l'état « on line » à l'étape 110, le daemon crée et configure l'interface réseau 30, à l'étape 112 afin d'assurer la communication entre la carte MMSIM à travers l'Ethernet sur USB dans la classe CDC-EEM. Le nom de l'interface créée est USBO (interface 30 sur la figure 1). Son adresse IP est 192.168.0.2. La commande utilisée par le daemon pour créer cette interface est : *ifconfig usb0 192.168.000.002 netmask 255.255.255.000.*

Quand la configuration de l'interface réseau 30 est faite, le daemon reste bloqué sur la fonction RECV (), dans sa boucle principale, dans l'attente d'un nouvel UEVENT.

A l'issue de ces étapes, les applications 18 peuvent adresser des requêtes *http ou https* au serveur SCWS de la carte MMSIM. La carte MMSIM a l'adresse *192.168.0.1.*

Afin de permettre au téléphone d'agir comme un routeur, le daemon 40 est propre à placer l'espace noyau 14 dans un mode routeur lorsqu'un contexte *pdp* est ouvert. A cet effet, le noyau Linux 14 comprend des règles supplémentaires de traduction d'adresses réseau permettant notamment de remplacer l'adresse IP du serveur SCWS en l'adresse IP du téléphone lors des communications du serveur SCWS sur le réseau au-delà du téléphone. En particulier, grâce à la traduction, le serveur SCWS de la carte MMSIM envoie pour accéder à internet non pas son adresse réseau propre mais l'adresse publique du téléphone. Ainsi, le téléphone est transformé en un routeur pour le serveur de la carte MMSIM.

Ainsi, lors de la réception d'un UEVENT, si celui-ci ne correspond pas à une information «vlsim online » à l'étape 110 pour permettre la création d'une interface USBO, un test est effectué à l'étape 114 pour déterminer un éventuel UEVENT ppp0 reportant qu'une nouvelle interface réseau a été créée. Sur Android, l'interface Internet du browsing est toujours *ppp0.* Lorsque l'interface *ppp0* est détectée à l'étape 114, le daemon place le noyau 14 en mode routeur à l'étape 116, en inscrivant la valeur 1 dans le NODE /*proc*/*sys*/*net*/*ipv4*/*ip_forward.*

En outre, il ajoute les règles de traduction d'adresses réseau correctes pour l'interface par l'instruction *iptables-t nat-A POSTROUTING ―*o *ppp0 ―j MASQUERADE.*

On comprend que le mode de création d'une interface décrite ici, est simple à mettre en oeuvre, la présence du daemon permettant une reconnaissance automatique et une connexion automatique entre le téléphone et le serveur de la carte MMSIM.

## Revendications

1. Procédé d'établissement, sur une plateforme utilisant le système d'exploitation LINUX, d'une connexion entre un serveur d'une carte MMSIM et une application (18) de l'espace utilisateur (16), la liaison à la carte MMSIM étant assurée par une interface USB-IC de l'espace noyau (14), par création d'une interface (30) de type Ethernet entre un module (32) de communication CDC/EEM de l'espace noyau (14) et l'application (18) assurant la communication à partir de commandes TCP/IP de la classe CDC-EEM
**caractérisé en ce qu'**il comporte la mise en oeuvre d'un deamon (40) dans l'espace utilisateur (16), assurant en tant que tâche de fond, la détection d'évènements issus de l'espace noyau (14), et commandant les étapes suivantes :
- le chargement (106) d'une pile USB hôte dans l'espace noyau (14) pour une communication ultérieure avec la carte MMSIM, et
- la création et la configuration (112) de l'interface réseau (30) lorsque le deamon (40) détecte la liaison physique d'un carte MMSIM.

2. Procédé selon la revendication 1, **caractérisé en ce que**, lors d'une phase de démarrage, il comporte la commande (104) d'un pilote d'accessoire (42) de l'espace noyau (14) par le deamon (40), grâce à une commande inscrite dans un NODE (44) pour assurer une alimentation de la carte MMSIM (12).

3. Procédé selon la revendication 1 ou 2, caractérisé en ce lors d'une phase de démarrage, il comporte la production (104) par le deamon (40), d'une commande inscrite dans un NODE (44) à destination d'un pilote d'accessoire (42) de l'espace noyau (14) sollicitant la production par le pilote d'accessoire (42) d'un évènement de type UEVENT spécifique représentatif de la liaison physique d'une carte MMSIM (12).

4. Procédé selon l'une quelconque des revendications précédentes, **caractérisé en ce qu'**il comporte les étapes consistant en :
la production, lors de la détection de la présence d'une carte MMSIM (12) reliée physiquement, d'un évènement UEVENT spécifique représentatif de la liaison physique par un pilote d'accessoire (42) de l'espace noyau (14)
la mise en oeuvre de la création et la configuration (112) de l'interface réseau (30), sous la commande du daemon (40) seulement lorsque le daemon (40) détecte cet évènement UEVENT spécifique représentatif de cette liaison physique.

5. Procédé selon l'une quelconque des revendications précédentes, **caractérisé en ce qu'**il comporte une étape d'établissement (116) du noyau (14) en mode routeur sous la commande du daemon (40) par mise en oeuvre de règles de traduction d'adresses réseau lors de la réception d'un évènement UEVENT reportant qu'une nouvelle interface réseau a été créée depuis le serveur de la carte MMSIM (12).

6. Téléphone sans fils comportant des moyens pour la mise en oeuvre d'un procédé selon l'une quelconque des revendications précédentes.
